Europäisches Patentamt

European Patent Office

Office européen des brevets

(11) Publication number: **0 136 218**
**A2**

## (12) EUROPEAN PATENT APPLICATION

(21) Application number: **84401713.7**

(22) Date of filing: **24.08.84**

(51) Int. Cl.⁴: **G 06 F 15/06**

(30) Priority: **29.08.83 US 527147**

(43) Date of publication of application: **03.04.85**
Bulletin 85/14

(84) Designated Contracting States: **DE FR GB IT NL**

(71) Applicant: **FAIRCHILD CAMERA & INSTRUMENT CORPORATION, 464 Ellis Street, Mountain View California 94042 (US)**

(72) Inventor: **Lyon, Richard F., 13300 Lennox Way, Los Altos Hills California 94022 (US)**

(74) Representative: **Chareyron, Lucien et al, Schlumberger Limited Service Brevets c/o Giers 12, place des Etats Unis B.P. 121, F-92124 Montrouge Cédex (FR)**

(54) Multiple port pipelined processor.

(57) A horizontal computation device includes a multi-ported random access memory in combination with independent pipelined memoryless function modules. The device is operative to implement a class of algorithms involving a high ratio of arithmetic computation to control complexity and good locality of data reference. The invention meets the criterion of a horizontal computation machine without undue complexity, that is, the invention provides a structure wherein a delay element capable of arbitrary delay can be allocated between every resource or function output and every resource or function input. The structure is a parallel input, parallel output random access memory having a plurality of dedicated serial buffered input ports and dedicated serial buffered output ports. The buffered ports are operative to provide transient storage in independent pipelines and parallel input and output to addressed locations of the random access memory. The invention also encompasses a program compilation technique and a multiple address bus primitive cell for a dynamic random access memory.

FIG __ 1

FIG.1A | FIG. 1B

FIG __ 1A

1

50.4295

# MULTIPLE PORT PIPELINED PROCESSOR

## BACKGROUND OF THE INVENTION

### Field of Invention

This invention relates to a signal processing apparatus of an architecture particularly adapted to single instruction stream, multiple data stream data processing operations. More particularly, the invention relates to a pipelined/parallel computing architecture constructed around a multiple port memory architecture. The invention is particularly useful in support of computationally intensive but regular signal processing operations such as those used in digital filters and in certain types of modelling of cochlear functions. A specific application of the invention is in a multiple stream serial signal processor employed in speech research wherein a plurality of relatively simple computational devices are configured in a single instruction stream, multiple data streams (SIMD) configuration.

Signal processing environments are an interesting domain for the study of computer architecture because so much is known about the class of algorithms typically employed and because a tremendous range of performance levels is required by different types of applications. Signal processing algorithms typically involve a high ratio of arithmetic computation to control complexity and very good locality of data reference (e.g., data does not proliferate beyond a known degree). The architecture herein described relates more to bit-serial architecture than to the conventional array processor architectures, including both general purpose array architectures and hard-wired matrix processing array processors or so-called smart memory devices which are dedicated to specified hard-wired tasks.

## Description of the Prior Art

By way of background and a description of the prior art, bit-serial techniques described in this work derive from earlier work at Xerox Palo Alto Research Center reported in "A Bit-Serial VLSI Architectural Methodology for Signal Processing," by R. F. Lyon, Proceedings of the First International Conference on Very Large Scale Integration, held at the University of Edinburgh, Scotland, August 18 through 21, 1981, and published in VLSI 81, John P. Gray, Editor, Academic Press (1981). The hardware architectures which were the subject of the earlier work included fixed connections and delays to implement a single computational algorithm efficiently. The work therein was not appropriate to efficient programmable general-purpose techniques, particularly since heavy pipelining of bit-serial function units makes the task of applying general-purpose programming techniques particularly difficult.

The conventional approach for handling numerical computational tasks efficiently is an array processor which employs what may be termed horizontal architecture. Typical array processors include the Floating Point Systems, Inc. AP120B and the Signal Processing Systems, Inc. SPS-81.

One element of the present invention relates to the concept of no-overhead task switching. Commercial products exist which relate to this concept generally but have adopted a different solution to the problem of allocating tasks. In particular, two computers known as the Xerox D1100 ("the Dolphin") and D1132 ("the Dorado"), which are used as scientific work stations, employ a technique of hard-wired micro-tasks which are capable of running concurrently to control peripherals and input/output as well as to control user programs. Each computer provides for a fixed number of registers dedicated to each micro-task, and each provides extra hardware to keep track of which task is running. Only a fixed small fraction of the total amount of register memory is ever available to a particular function or task, even if a large amount of memory is unused.

It is known that an efficient microprocessor unit might be constructed by the use of heavy pipelining, that is, by allocating bit-serial functions into synchronously-clocked tasks. For example, in the Microprocessor Without Interlocked Pipe Stages Project (MIPS) at Stanford University, the object was to construct an efficient microprocessor chip by the use of heavy pipelining without providing hardware interlocks and bypasses used in other architectures. Such hardware interlocks and bypasses had in the past been used to prevent the programmer or the compiler from being aware that the architecture of the machine was constrained by pipelines. In the MIPS Project, the compiler was informed that the machine was pipelined so that it could generate sufficient "No-op" instructions as needed in order to allow the compiler to wait for the results of previous instructions in the pipe. In addition, the MIPS compiler could, to a limited extent, rearrange instructions in order to minimize the number of "No-op" instructions needed without violating the semantic intent of the program. In the MIPS machine, it was not possible to use all of the independent pipes at optimum efficiency since each step which requires the use of the result of a previous step would still require a large number of "No-op" instructions while awaiting results.

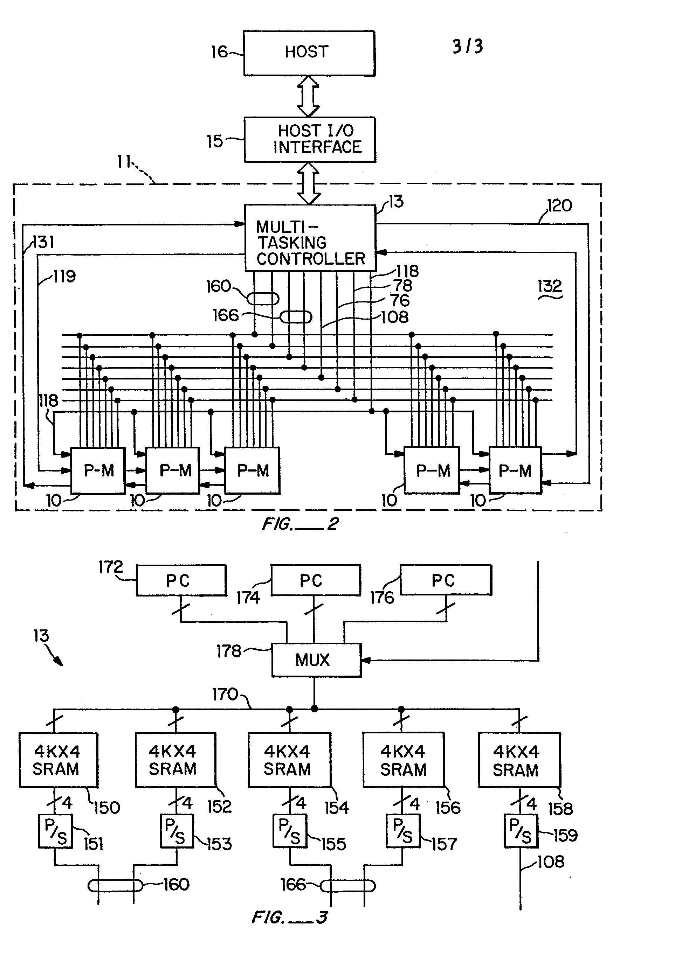

The closest known prior art architecture to the present invention was reported by B.R. Rau et al. of the TRW/ESL Advanced Processor Technology Laboratory in "Efficient Code Generation for Horizontal Architectures: Compiler Techniques and Architectural Support", Proceedings of the Ninth Annual Symposium on Computer Architecture, April, 1982. Therein the constraints of the polycyclic architecture are described. That constraint is that a dedicated delay element must exist between every resource output and every resource input which connect to one another. The delay element is required in order to enable a datum to be delayed an arbitrary amount of time in transit between a corresponding output and input. Figure 3 therein succinctly illustrates relevant features of a polycyclic architecture contemplated by the authors. In order to implement the type of polycyclic architecture with full communication flexibility as contemplated by the authors, a full crossbar switch with memory at each crosspoint would have to be implemented. The functionality of such an approach for each of the delay elements, as well as the need to have a large array of each delay element, makes this a functionally and practically cumbersome approach for memory of any substantial size. A 2x2 crossbar for eight (8) bits of data which is capable of a sixteen (16) word delay at each crosspoint and a cycle time of 100 nanoseconds is described in the Rau et al. paper entitled "A Statically Scheduled VLSI Interconnect for Parallel Processors, Proceedings CMU Conference on VLSI Systems and Computations, Carnegie Mellon University, Pittsburgh, Pennsylvania, pp. 389-395, October 1981 (Computer Science Press). It is readily seen that such an approach becomes unwieldy for any substantial number of resources (i.e., elements of the processor set) to be interconnected. A more efficient approach is warranted.

## SUMMARY OF THE INVENTION

The invention comprises a shared non-blocking multi-ported central random access memory device for use in a horizontal computation architecture. By horizontal, it is meant an architecture wherein elements of the processor set are capable of being controlled concurrently and independently to the extent conflicts in the communication paths are avoided. The present invention minimizes the likelihood of such conflicts. According to the invention, locations within a central random access memory unit are allocated to delay functions as needed in order to store intermediate results. A plurality of serial to parallel and parallel to serial converter units (e.g., shift registers with parallel ports) are provided as interface for the random access memory unit and which are multiplexed to serve as interconnect between inputs and outputs of other functional resources. The memory unit converters and resources together form a pipelined bit-serial computation device. Each such computation device may be interconnected with identical or similar devices under control of a task controller for performing various computation tasks in parallel.

A digital memory apparatus for serial data interconnection with memoryless serial function units in a horizontal digital computation apparatus according to the present invention includes a plurality of input port means each having means for receiving serial digital data signals and for discharging received digital data signals in parallel; and a plurality of output port means each including means for receiving parallel digital data signals and for discharging received digital data signals serially. A random access memory unit is coupled to the plurality of input port means for receiving parallel digital data at addressed locations and is coupled to the plurality of output port means for discharging parallel digital data signals from addressed memory locations.

6

Specifically, a multi-port memory device for a computation device, herein called a serial signal processor unit, is provided comprising an input interconnect means having a first plurality of buffered input ports each input port being coupled to receive a second plurality of bits at a second plurality of bit locations in a serial configuration and being coupled to load said second plurality of bits in parallel to a first muliplexing means, multiplexing means for directing said second plurality of bits in parallel as a digital word to a random access memory element at a specific memory location as specified by an address signal, a random access memory unit for storing digital words, multiplexing means for directing said second plurality of bits in parallel as a digital word as specified by an address signal to a specified one of a first plurality of buffered output ports, and a first plurality of buffered output ports, each output port being coupled to unload the second plurality of bit locations from said memory element and to serially transmit a digital signal representing the digital word stored in the addressed memory element. The multiplexing means may be a single multiplexing element which enables either a buffered input port or a buffered output port, or it may be two multiplexing elements, one dedicated to input ports and one dedicated to output ports to allow simultaneous writing and reading. Alternatively, multiple input multiplexer and multiple output multiplexer may be employed as long as simultaneous addressing of the random access memory element is properly controlled. For this purpose, an address decoder and separate address line may be provided for each multiplexing means. It should be understood that the functional elements of the memory devices may not be separately identifiable. For example, the buffered ports may use a common bus structure which share the multiplexing means, and the multiplexing means may be an imbedded functional structure of each group of the buffered ports.

The serial signal processing unit can be replicated to construct a relatively large bit-serial, pipelined computation machine to obtain efficient numerical computing with a small number of monolithic devices. For example, each individual memory device may interconnect two multipliers and three adders with all accumulation and storage operations being local to the memory element. Within the word-loading/unloading time of the serial input/output ports of the memory device, the random access memory element therein may be permitted to execute many read and write cycles and to direct data to or from other input and output ports through the multiplexing means.

In a bit-serial pipelined function digital computation device employing the memory device, a method for allocating tasks among memoryless functional units is provided.

According to the invention, intermediate state information employed by one task of an algorithm operative on the computation machine is restricted to be separate from any other intermediate state information employed by any other task in the algorithm. Only functional algorithms which are composed of tasks which can operate at known rationally-related repetition rates are employed on the computation machine. Memory locations are allocated to different tasks upon compilation of instructions defining the algorithm into executable state information such that multiple task instructions may be interleaved among the memoryless functional units without reference to apparatus operation.

More particularly, in accordance with the method of allocating tasks among the memoryless functional units, instructions are designed so as to operate in fields defined by paths through the function resources, such as through the multipliers and the adders. As such, program instructions are simple address bits to the memory and simple control bits to the function resources. Multiple independent control signals run in parallel to carry only address or control bits of information, and nothing else.

Further, according to the invention, multi-task instruction interleaving is provided by restricting intermediate state information employed by one task to be separate from any other intermediate state information employed in any other tasks. Specifically, only two types of state information storage are permitted, namely, i) transient pipeline state information storage for storing transient state information that cannot be effected by an instruction executed later than the instruction which initiated the state, and ii) main memory storage for storing memory state information, such as partial sums of products in a typical application. The transient information is stored in a pipeline for the length of time required to propagate a word. The serial function units are memoryless in that their output is not dependent on any previous computations. Their only memory is in function delay. Thus, accumulators are excluded from this class of function units. The memory state information is stored in program-designated addresses in the random access memory until erased.

The allocation of tasks in the use of the random access memory storage is performed by a compiler program at the time of compilation of the higher level programming language into executable control information. In contrast hereto is the simple and less efficient expedient of allocating memory locations at run time wherein a separate instruction list and program counter are provided for each of several tasks wherein each instruction from a task not waiting for a result from a previous instruction is accessed and executed. Since the present invention is generally limited to special purpose computation tasks which run at known rationally-related repetition rates, the allocation of memory locations to different tasks, including accumulator functions, can be implemented at the time of program compilation. A computation device according to the invention therefore comprises the combination of a multi-ported random access memory device and independent pipelined memoryless function modules.

The random access memory device comprises an array of three-transistor multiple address bus dynamic primitive memory cells. Each primitive memory cell has a separate read bus and a write bus. A separate read decoder and write decoder is provided for each bus. No provision need be made for sense amplifiers, and there is no provision in hardware for refreshing the dynamic memory cells. Memory refresh may, for example, be allocated to a separate software task.

There is no fundamental limitation on the number of read buses in a memory cell. In fact, port groups can be added together with an appropriate scaling of the cell transistors to increase the number of ports within the memory. The ratio of 4 to 1 for memory bus cycle time to bit clock time appears optimum. Depending on the algorithm implemented, a memory device according to the invention could be provided with the appropriate number of internal ports required to optimize implementation of the chosen class of algorithms.

The invention will be better understood by reference to the following detailed description of specific embodiments in connection with the accompanying drawings. It is to be understood, however, that the embodiments herein described are only examples of the inventive concept.

## BRIEF DESCRIPTION OF THE DRAWINGS

Figure 1 is a block diagram illustrating one embodiment of a serial signal processor unit according to the invention.

Figure 2 is a block diagram of a multi-signal serial processor according to the invention.

Figure 3 is a block diagram of a multi-tasking controller of a type used in a device as shown in Figure 2.

## DETAILED DESCRIPTION OF SPECIFIC EMBODIMENTS

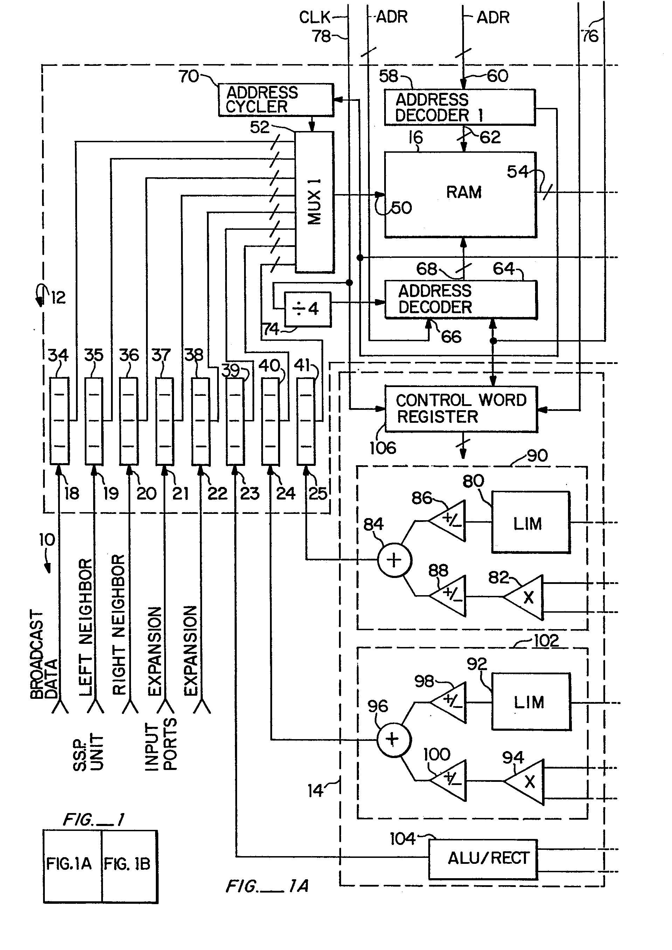

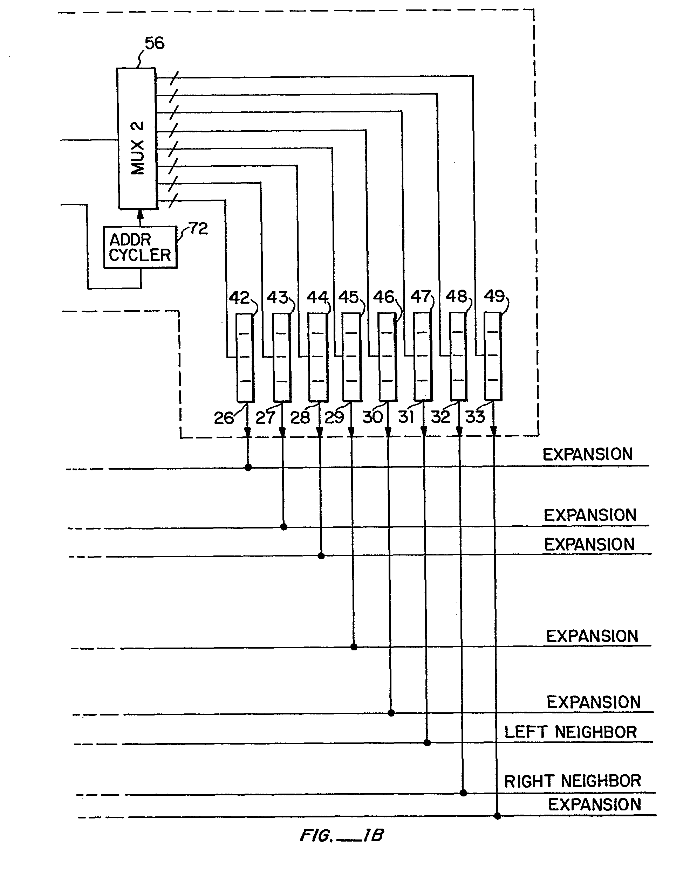

In Figure 1, there is shown one embodiment of a serial signal processor unit, designated an SSPC 10 (for serial signal processor chip) which incorporates the elements of the invention. Central to the invention is a multiport memory device 12. The multiport memory device 12 is preferably employed in a monolithic structure with a serial processor set 14, the architecture of which is determined by the nature of instructions to be executed in a horizontal structure. The serial processor set 14 comprises a set of functions or resources with specific input ports pipelined to specific output ports thereof. The combination of the multiport memory device 12 and the serial processor set 14 satisfy the desired criterion of a "polycyclic" architecture, that is, that between every resource output and resource input there exists a delay element which enables a datum to be delayed by an arbitrary amount of time in transit between the corresponding output and input.

According to the invention, these delays are not dedicated memory as in a tone polycyclic architecture, but rather are allocated out of one group of memory elements.

The structure of the multiport memory device 12 is of particular interest. The multiport memory device 12 comprises a random access memory unit 16, a plurality of input ports 18-25, and a plurality of output ports 26-33. Each input port 18-25 is buffered by a serial input-parallel output shift register 34-41, and each output port 26-33 coupled to provide serial output data through a parallel input serial output shift register 42-49. Each parallel output shift register 34-41 is coupled to a common parallel input port 50 of the random access memory element 16. A first multiplexing means 52 is provided for coupling each of the parallel outputs of the parallel output shift registers 34-41 to the common parallel input port 50. The first multiplexer 52 may be a switch or it may be a scheme whereby a selected one of the parallel output shift registers 34-41 is enabled to access the parallel input port 50 through a shared bus structure.

The random access memory element 16 also has a common parallel output port 54 to which are coupled the parallel inputs of each of the parallel input shift registers 42-49 through a second multiplexing means 56. A first address decoder 58 is associated with the first multiplexer 52. The first address decoder 58 includes a first address input bus 60 and a first decoded address output bus 62, the decoded address output bus being coupled into a first set of address lines (not shown) of the cell array forming the random access memory element 16, said address bus 62 controlling the WRITING of data into the array. A second address decoder 64 is associated with the second multiplexer 56. The second address decoder includes a second address input bus 66 and a second decoded address output bus 68, the second decoded address output bus 68 being coupled into a second set of address lines (not shown) into the cell array forming the random access memory element 16, said address bus 68 controlling the READING of data out of the array.

Means are provided for controlling the multiplexers 52 and 56. In particular, a first address cycler 70 and a second address cycler 72 are coupled to the first multiplexer 52 and to the second multiplexer 56, respectively, each address cycler 70, 72 being operative in response to a clock signal input 75. The address cyclers 70 and 72 cycle through the addresses of each of the shift registers associated with its multiplexer 52 or 56 to assure that all input ports and output ports are serviced at least once each basic address cycle. External addressing of a multiplexer is not necessary where an address cycler is used in connection therewith.

The address decoders 58 and 64 and address cyclers 70 and 72 are driven by an address clock 74 which divides a master clock signal 78 by four. The address clock 74 may also be used to cycle other functions, such as the instruction functions. Alternatively, a clock at a separate but synchronized rate may be employed for the instruction function.

In the specific embodiment of the multiport memory according to the invention, there is provided a structure accommodating a 32-bit word, each word divided into four (4) 8-bit segments, wherein the random access memory element 16 is capable of storing address format on 60, 66 sixty-four (64) words of 32-bits. The random access memory element 16 thus forms an array of 2,048 primitive memory cells which is addressable in 8 read + 8 write address cycles, each address cycle accommodating the transfer of 32 bits. Two address decoders are provided to permit simultaneous reading and writing out of and into the random access memory element 16 to double the effective memory bandwidth as compared to a single port memory. Alternatively, a single address decoder and single multiplexer may be employed in connection with a group of dedicated input ports and dedicated output ports. A single address decoder according to the invention would then be constrained to service all input ports and output ports within a single 32-bit word cycle. A memory structure is also foreseen wherein more than two address decoders and more than two multiplexers are employed, thereby multiplying still further the effective memory bandwidth of the random access memory element 16.

Since the address decoders 58 and 64 are structured to transfer data to and from the shift registers 34-41 and 42-49 in groups of 32 bits, it is useful to have access to a source of serial synchronization. For this purpose, a signal input is provided known as the MSB (most significant bit) timing marker whereby the address decoders 58 and 64 and the processor set may be synchronized to the boundaries of serial data words. The MSB timing marker line 76, together with the address lines to address ports 60 and 66 and the master clock line 78, are provided from an external element for coupling to external control sources.

The multiport memory device 12 according to the invention may be used with a variety of serial processor sets 14. Only one example is shown herein. The representative processor set 14 comprises a first limiter 80, a first multiplier 82, a first adder 84 and first and second sign controllers 86 and 88 coupled together in a first module 90, a second limiter 92, a second multiplier 94, a second adder 96, and third and fourth sign controllers 98 and 100 coupled together in a second module 102. In addition, there is provided an arithmetic logic unit and rectifier module 104.

Each of the modules 90, 102 and 104 are of the serial arithmetic type of function (as opposed to a parallel type of function). For example, the ALU/rectifier module 104 implements the rectifier function: If A < 0 then B*(+1 or -1) else A, where A and B are input values. The rectifier portion is capable of performing half or full-wave rectification, and of testing for negative numbers. It may be a variety of designs. One suggested design is a pair of 32-bit shift registers to hold values A and B until the sign bits of A can be examined, a multiplexer which selects either A or the product of B multiplied by 1 or -1. Half-wave rectification is implemented by setting the B input to 0. A 32-bit delay is required to fully implement a rectification of a serial signal of 32-bit lengths, and a signal delay results which is 32 bit-times at the master clock rate. The ALU portion of the module 104 performs add, subtract, logical AND, logical OR and logical EXCLUSIVE OR. The ALU functions may be implemented in an adder programmed logic array provided with several select lines to decode control bits applied thereto. The control bits are provided through a control word register 106. The control word register 106 receives serially all of the control bits via a control line 108. The control word register 106 applies the appropriate control bits to each of the function modules once per instruction cycle. To this end, the MSB timing marker serves as the instruction clock for initiating execution, and the master clock provides the state switching which cycles the serial control word shift register 106 and the other shift registers.

Each of the limiters 80 and 92 is operative to detect for an overflow in a data word and to replace the word with the largest positive or negative number preserving the sign. A limiter is an important function in a two's complement arithmetic machine because it prevents unwanted overflow. The limiter typically requires 30 bit-times of delay to fully implement a function, the extra 2 bit-times being reserved for the time required by a sign controller, such as sign controller 86, and an adder, such as adder 84.

The sign controllers 86, 88, 98 and 100 are switches which are operative to serially convert an arbitrary length word into its two's complement representation. In operation, when enabled, as a word is fed to the sign controller serially, bits are passed through unchanged until the occurrence of the first bit having a one value, after which all bits are inverted. Otherwise the sign controller is transparent.

The adders 84 and 96 are operative to add two numbers serially. A serial adder may be implemented by a programmed logic array in a variety of known ways.

The multipliers 82 and 94 are serial pipeline multipliers which implement a modified Booth's algorithm in a serial pipeline manner. One such pipeline multiplier is described in a paper entitled "Two's Complement Pipeline Multipliers", by R. F. Lyon, IEEE Transactions on Communications, April 1976, pp. 418-425. This article is incorporated herein by reference. Other implementations of pipeline multipliers may be utilized in the discretion of the designer.

The structure of the serial signal processor unit 10 according to the invention is particularly adapted to construction according to known principles of VLSI fabrication. Reference is made to the work of C. A. Mead and L. A. Conway, Introduction to VLSI Systems (1980) Addison-Wesley, Publishers.

A particular implementation of a serial signal processor unit 10 according to the invention interconnects the multiport memory device 12 and the serial processor set 14 as follows:

The second multiplexer 56 is coupled to provide read control for the random access memory element 16. Output port 26 is coupled to the input of the first limiter 80. Output port 27 is coupled to a first input of the first multiplier 82. Output port 28 is coupled to a second input of the first multiplier 82. Output port 29 is coupled to an input of the second limiter 92. Output port 30 is coupled to a first input of the second multiplier 94. Output port 31 is coupled to a second input of the second multiplier 94. Output port 32 is coupled to a first input of the module 104. Output port 33 is coupled to a second input of the module 104. Each of the output ports 26-33 are also provided with external connections. For example, a connection is provided to output port 31 for coupling to a similar SSPC mounted to the left of the SSPC 10 of Figure 1. A connection to output port 32 is provided for coupling to an SSPC mounted to the right of the SSPC 10 of Figure 1.

The first multiplexer 52 provides the write control for the random access memory element 16. Input port 18 is coupled to receive serial broadcast data from an external source. Input port 19 is provided with a connection for coupling signals from an SSPC mounted to the left of the SSPC 10 of Figure 1. Input port 20 is provided with a connection for receiving signals from an SSPC mounted to the right of the SSPC 10 of Figure 1. Input ports 21 and 22 are provided with expansion connections and are therefore not in use. Input port 23 is coupled to receive all signals from the output of module 104. Input port 24 is coupled to receive signals through the second adder 96, which in turn receives all signals through the second limiter 92 and second multiplier 94. Finally, input port 25 is coupled to receive all signals through the first adder 84, which in turn receives all signals processed through the first limiter 80 and first multiplier 82.

In this specific embodiment seven additional lines are provided for providing instruction, timing and address information. A one-bit control line 108 is coupled to the control word register 106. The MSB timing marker line 76 is coupled to the address coders 58 and 64 and to the control word register 106. The first address input bus 60 and the second address input bus 66 may each be two (2) bits wide. Finally, a master clock signal may be provided through a master clock signal line 78 to the address cyclers 70 and 72 and to any slave clocks, such as clock divider 74.

The SSPC 10 of Figure 1 operates as follows:

Serial control signals are clocked into the control word register 106 via signal line 105 synchronously with the master clock on clock signal line 78. Address signals are supplied to the address decoders 58 and 64 through individual serial lines directed to subsections of each address decoder 58 or 64. For example, one address line may serially load one-half of an address decoder at the master clock rate.

Data from a central source is supplied to the first input port 18. Data from the left neighbor is supplied through the second input port 19. Data from the right neighbor is applied to the third input port 20. Data out of the memory is supplied to the right neighbor through output port 32 and to the left neighbor from output port 31.

In a preferred embodiment, the basic controller cycle is four (4) serial bits. Eight (8) controller cycles are provided per word time. The master clock bit rate is 16 MHz, and the controller operates at 4 MHz. The MSB timing marker is provided at a rate of 500 kHz, which is 1/32 of the master clock bit rate. Five (5) microcode carrying lines, namely, four (4) address lines and one (1) control line, provide all of the basic address and control information representing the permitted states of the resources and the read and write addresses of the memory. The address cyclers 70 and 72 automatically assure that each input port and each output port are serviced once per instruction cycle The address decoders direct the read addresses and write addresses in accordance with preprogrammed instructions to assure proper throughput of information. The random accessibility of the stored information assures that data in any pipeline between an input port and a corresponding output port can be stored an arbitrary length of time in the discretion of the controlling program.

An important feature of the invention is in the method whereby the SSPC 10 is operated. According to the inventive method, tasks are allocated among the memoryless functional units forming the serial processor set 14 by restricting intermediate state information employed by one task to be separate from any other intermediate state information employed by any other tasks, further by limiting the functional algorithms to those algorithms composed of tasks which can operate at known rationally-related repetition rates, and finally by allocating memory locations to higher level tasks at the time of compilation of the higher level programming language into executable state information instead of allocating memory locations to the tasks at the time of execution of the tasks. In this manner, multiple task instructions may be interleaved among the memoryless functional units without the need to register "No-op" instructions to allow tasks within a particular pipeline to catch up with other tasks. Moreover, the control word is structured so as to permit the execution of instructions affecting one set of functional units totally independently of other functional units. Hence, the architecture of the SSPC and the compiler supporting any bit level programming are both structured to support true pipelined signal processing using serial functional units.

In Figure 2 there is shown an MSSP 11 (for multi-serial signal processor) in which a plurality of SSPC's 10 are employed for carrying out computationally intensive, but regular, signal processing operations, such as those used in certain types of digital filtering functions. The MSSP 11 is configured in a single instruction stream, multiple data stream (SIMD) configuration for the overall processor array. Consequently, there is no need for any control in each of the processor units, i.e., in each of the SSPC's 10. Nevertheless, a reasonably wide instruction word is required. For example, in the SSPC 10 the serial interface through lines 108, for the control and lines 160 and 166 for the address values provide for serial input of the miscellaneous control bits, the random access memory read addresses and the random access memory write addresses. A 160-bit wide control word may for example enter each SSPC 10 serially on these three sets of lines.

Control is provided through an external multi-tasking controller 13. The multi-tasking controller, in addition to providing the address and miscellaneous control word signals through lines 160, 166 and 108, also provides broadcast data through broadcast data line 118, master clock signals through master clock line 78, and a most significant bit timing marker through MSB timing marker line 76. These signals are directed in parallel to each of the SSPC's 10. Each of the SSPC's 10 are arranged in an array in accordance with the task to be performed. For example, each SSPC 10 may be disposed to communicate input and output information with adjacent left and right neighbors through connected serial input ports and output ports. The controller 13 can provide input through a left neighbor input line 119 and a right neighbor input line 120. The controller may also receive data from the end of the array through a left neighbor output line 131 and a right neighbor output line 132. The expansion ports as shown in Figure 1 may be used to provide still further expansion of the array of SSPC's 10, as for example, interconnecting one SSPC 10 with other than a neighbor.

The multi-tasking controller 13 may be connected to a host computer's input/output interface 15 which in turn is connected to a host computer 16 which requires the computation of the values as computed by the MSSP 11.

A number of different configurations can be employed for the controller 13. Figure 3 illustrates but one specific embodiment. In Figure 3 there is shown one specific embodiment of a basic controller 13 capable of executing three different programs concurrently. The controller 13 comprises a plurality of static random access memories or S-RAMs 150, 152, 154, 156 and 158, each of which is coupled to a parallel to serial converter 151, 153, 155, 157 and 159. The parallel to serial converters 151 and 153 provide outputs to the address lines 160. The parallel to serial converters 155 and 157 provide outputs to the address lines 166. The parallel to serial converter 159 provides the output to the control line 108. Each of the S-RAMs 150, 152, 154, 156 and 158 is, for example, a 4-K bit memory which is four (4) bits wide. Thus, each S-RAM is coupled through a 4-bit wide bus to the corresponding parallel to serial converter. Each of the S-RAMs is addressed in parallel by a parallel address bus 170. As shown, the address bus is coupled to receive address signals from a plurality of program counters 172, 174, and 176 through a multiplexer 178. Each program counter 172, 174, and 176 represents a different program under execution. In a simple case, one program counter provides the addresses for instructions for each program stored in the random access memories. The random access memories store the microcode representing an executable program. In a specific preferred embodiment, four (4) serial bits represent a basic controller cycle and eight (8) controller cycles are provided per word time wherein the bit rate is 16 MHz, and the controller 13 operates at a rate of 4 MHz.

Referring again to Figure 2, it is the function of the host 16 to start the various program counters and to provide the input instructions to the S-RAMs 150, 152, 154, 156 and 158 representing the instructions to be provided to the MSSP 11. The interleaving of instructions, which occurs according to the invention at compile time, is determined by analysis of the particular algorithm to be executed by the compiler resident in the host 16.

The RAM element 16 is preferably a dynamic random access memory element formed of 2-bus-type primitive cells. Such a structure permits the address buses for reading and writing to individual cells to be active simultaneously thereby effectively doubling the memory bandwidth. Other structures may be suitable for use in the inventive device such as a single transistor dynamic random access memory cell with only a single-bit line or a multiple transistor memory cell having multiple read-bit lines or write-bit lines or both.

In a specific embodiment, the RAM element 16 does not require sense amplifiers and does not include hardware refresh logic. Rather, the read-bit lines are directly read to the parallel output port, and software or firmware refresh logic is provided through the controller 13.

The invention has now been explained with respect to specific embodiments. Other embodiments will be apparent to those of ordinary skill in the art. It is therefore not intended that this invention be limited except as indicated by the appended claims.

0136218

50.4295

WHAT IS CLAIMED IS:

1. For use in a horizontal digital computation apparatus, a digital memory apparatus for serial data interconnection with memoryless serial function units, said memory apparatus comprising a random access memory unit and characterized by:

a plurality of input port means, each said input port means comprising means for receiving serial digital data signals and for discharging received digital data signals in parallel; and

a plurality of output port means, each said output port means comprising means for receiving parallel digital data signals and for discharging received digital data signals serially;

said random access memory unit being coupled to said plurality of input port means for receiving parallel digital data at addressed memory locations and being coupled to said plurality of output port means for discharging parallel digital data signals from addressed memory locations.

2. The digital memory apparatus according to Claim 1 characterized in that said random access memory unit has parallel data input means and parallel data output means, further characterized by means for routing input data signals through a plurality of said input port means to said data input means and means for routing output data signals from said parallel data output means to said plurality of output port means.

3. The digital memory apparatus according to Claim 2 characterized in that said data input means and said data output means are simultaneously operable to read and write data signals.

4. The digital memory apparatus according to Claim 1, 2 or 3 further characterized by means for switching said input port means and said output port means at least once

0136218

each memory control cycle to service all of said plurality of said input port means and output port means, a memory control cycle being of a duration of a bit cycle.

5. In combination, a digital memory apparatus including a random access memory unit and input port means and output port means for serial data interconnection with memoryless serial function units; and

memoryless serial function units interconnected with input port means and output port means of said digital memory apparatus, characterized in that:

said digital memory apparatus comprising a plurality of input port means, each said input port means comprising means for receiving serial digital data signals and for discharging received digital data signals in parallel;

a plurality of output port means, each said output port means comprising means for receiving parallel digital data signals and for discharging received digital data signals serially;

said random access memory unit being coupled to said plurality of input port means for receiving parallel digital data signals at addressed memory locations and being coupled to said plurality of output port means for discharging parallel digital data signals for addressed memory locations; and

each one of said serial function units comprising at least a serial digital function means having an input port coupled to one of said plurality of output port means and an output port coupled to one of said plurality of input port means.

6. The combination of Claim 5 characterized in that at least one of said plurality of input port means and one of said plurality of said output port means is provided for interconnection with an output port means and an input port means, respectively, of another one of said digital memory apparatus, thereby to define a matrix of a plurality of said combinations.

7. The combination of Claim 5 or 6 characterized in that said random access memory element has parallel data input means and parallel data output means, further characterized by means for routing data signals through said plurality of input port means to said data input means and means for routing output data signals from said parallel data output means to said plurality of output port means.

8. The combination of Claim 7 characterized in that said data input means and said data output means are simultaneously operable to read and write data signals.

9. The combination according to Claim 7 or 8 further characterized by means for switching said input port means and said output port means at least once each memory control cycle to service all of said plurality of input means and output means, a memory control cycle being of duration which is a multiple of the duration of a bit cycle.

10. For use in a digital computation apparatus, a memory apparatus characterized by in combination:

an input interconnect means having a first plurality of buffered input ports, each said input port being coupled to receive serially a digital signal representing a second plurality of bits and to discharge said second plurality of bits in parallel;

first routing means for directing said second plurality of bits from each one of said first plurality of input ports to a specific memory location in a parallel input-parallel output memory unit;

a parallel input-parallel output memory unit, said memory unit being coupled to said first routing means and being operative to store a digital signal representative of digital words at addressed, ranaomly accessible word locations in said digital memory unit;

a second routing means coupled to said memory unit for directing digital words in said memory unit to specified ones of a third plurality of buffered output ports; and

output ports of said third plurality, said output port being coupled to receive said second plurality of bits in parallel from randomly addressed bit locations in said memory unit through said second routing means and to serially transmit a signal representing a digital word stored in said memory element.

11. The apparatus according to Claim 10 characterized in that said first plurality is equal to said third plurality and said digital word is of a plurality equal to an integral multiple of said second plurality such that fractional segments of said digital word may be received and discharged in parallel to form a continuous serial digital data stream.

12. The apparatus according to Claim 11 characterized in that said digital word has a length of 32 bits.

13. In a bit-serial pipelined-function digital computation apparatus, a method for allocating tasks among memoryless functional units, said functional units being operative to process data stored in a memory apparatus in response to control input signals, said method cnaracterized by the steps of:

restricting intermediate state information employed by one task of an algorithm operative on said computation machine to be separate from any other intermediate task information employed by any other task in said algorithm;

employing only functional algorithms on said computation machine which are composed of tasks which can operate at known rationally-related repetition rates; and

allocating memory locations to different tasks upon compilation of instructions defining said algorithm into executable state information, such that multiple task instructions may be interleaved among memoryless functional units without reference to apparatus operation.

1/3

FIG.___1

| FIG.1A | FIG. 1B |
|--------|---------|

FIG.___1A

FIG.__1B

0136218

3/3

**FIG.___2**

16 — HOST

15 — HOST I/O INTERFACE

11

13 — MULTI-TASKING CONTROLLER

120

131

119

160

166

118
78
76
108

132

118

P-M   P-M   P-M   P-M   P-M

10   10   10   10   10

**FIG.___3**

172 — PC    174 — PC    176 — PC

13

178 — MUX

170

4KX4 SRAM — 150
4KX4 SRAM — 152
4KX4 SRAM — 154
4KX4 SRAM — 156
4KX4 SRAM — 158

P/S 151   P/S 153   P/S 155   P/S 157   P/S 159

108

160   166